# EUROPEAN PATENT APPLICATION

(11) **EP 2 110 879 A1**
(43) Date of publication of application: **21.10.2009**
(21) Application number: 09251100.5
(22) Date of filing: 15.04.2009
(51) Int. Cl.: H01M 8/04, H01M 8/06

(54) **Fuel supply device for fuel cell and fuel cell system using the same**

(30) Priority: 15.04.2008 KR 20080034638
(71) Applicant: Samsung SDI Co., Ltd., Gyeonggi-do (KR)
(72) Inventor: Han, Man-Seok, Yongin-city, Gyunggi-do (KR); Kim, Dong-Hyun, Yongin-city, Gyunggi-do (KR); Hong, Ming-Zi, Yongin-city, Gyunggi-do (KR); Kim, Ju-Yong, Yongin-city, Gyunggi-do (KR); Suh, Jun-Won, Yongin-city, Gyunggi-do (KR); Ju, Ria, Yongin-city, Gyunggi-do (KR); Yoshida, Yasuki, Yongin-city, Gyunggi-do (KR); Cho, Woong-Ho, Yongin-city, Gyunggi-do (KR); Kim, Hyun, Yongin-city, Gyunggi-do (KR); An, Jin-Hong, Yongin-city, Gyunggi-do (KR)
(74) Representative: Taor, Simon Edward William

(57) **Abstract**

A fuel supply device for a fuel cell and a fuel cell system using the same that prevent H₂O, used in reforming from reaching and collecting in the fuel cell stack. The fuel supply device for a fuel cell includes a fuel reformer adapted to generate reformate via a reforming reaction, a gas-liquid separator coupled to an outlet of the fuel reformer, the gas-liquid separator being adapted to receive the reformate and control a moisture amount included within the reformate, a pipe coupled to an outlet of the gas-liquid separator, the pipe being adapted to pass the reformate and a condensed water removing device coupled with the pipe, the condensed water removing device being adapted to prevent condensed water within the reformate within the pipe from passing to an outside.

## Description

### BACKGROUND OF THE INVENTION

### Field of the Invention

A fuel supply device for a fuel cell and a fuel cell system using the same that reduces or prevents H₂O, used in steam reforming from reaching and collecting in the fuel cell stack.

### Discussion of Related Art

In general, a fuel cell is a system that directly converts chemical energy into electric energy by the electro-chemical reaction of fuel and an oxidant. The fuel cell has been spotlighted as a next-generation power generation technology since it does not need a driving device, has a high power generation efficiency and does not generate environmental problems such as air pollution, vibration, noise, etc., as compared to an existing turbine generator. Types of fuel cell can include a phosphoric acid fuel cell, an alkaline fuel cell, a polymer electrolyte membrane fuel cell, a molten carbonate fuel cell, a solid oxide fuel cell, etc. according to the kind of electrolyte. The respective fuel cells are basically operated by the same principle, but have different sorts of fuels, operation temperatures, catalysts, electrolytes, etc. These fuel cells have been researched and developed for various uses, such as industrial use, household use, leisure use, etc. In particular, some fuel cells have been researched and developed as a power supply for transportation, to be used in vehicles and ships, etc.

Among others, the polymer electrolyte membrane fuel cell (PEMFC), which uses a solid polymer membrane as an electrolyte, has advantages of high output characteristics, low operating temperature, and rapid starting and response characteristics as compared to the phosphoric acid fuel cell, and is widely applicable as a portable power for portable electronic devices, transportation items, such as a car or a yacht, as well as a distributed power, such as stationary power generating stations used in a house and in a public building, etc.

The polymer electrolyte membrane fuel cell can be largely sorted into two components, that is, 1) a stack and 2) a system and an operation part. The stack directly generates electricity by the electro-chemical reaction of fuel and an oxidant and includes an anode electrode catalyst, a cathode electrode catalyst, and a membrane-electrode assembly of an electrolyte inserted between these electrode catalysts. Also, the stack can be manufactured from stacking a plurality of membrane-electrode assemblies. In the case of the stack-type stack, separators are arranged between the membrane-electrode assemblies. The system and operation part includes a fuel supplier, an oxidant supplier, a heat exchanger, a power converter, a controller, etc. to control the operation of the stack.

The aforementioned polymer electrolyte membrane fuel cell can use reformate instead of hydrogen fuel. The reformate is generated from a reforming reaction inherently using fuel and water so that it includes a considerable amount of steam. A common form of reforming is steam reforming. Steam reforming occurs according to the following reforming reaction formulas A and B:
[Reaction A]

   C₃H₈ + 6H₂O → 3CO₂ + 10H₂
[Reaction B]

   CO + H₂O → CO₂ + H₂

H₂ is needed to operate a fuel cell. However H₂ is not always available in large quantities. The above reforming reactions A and B allow for H₂ to be produced from C₃H₈. However, when the above reforming reactions A and B occur in the vicinity of the fuel cell, there is a tendency for the steam H₂O to enter the fuel cell and damage the fuel cell.

In the above reactions, are the propane (C₃H₈) is one of the raw materials or the reactants, and the reformate (or the product of the above reforming reactions) includes essentially hydrogen gas (H₂), however, there will be also steam mixed in. Hence, the reformate mixture will include the product of the above reforming reactions and steam, Therefore, a separate humidifier supplying steam in a process supplying reformate to an anode of the stack can be omitted. A process separating some of moisture using a heat exchanger and a gas-liquid separator is needed to achieve proper humidity. In the process, the reformate from the gas-liquid separator still has a predetermined temperature and includes moisture corresponding to the temperature.

However, a pipe coupling between the gas-liquid separator and the stack has its own heat exchanging characteristics. Therefore, the reformate passing through the pipe is cooled and the steam included in the reformate is condensed. When the condensed water reaches the inside of the stack, the water collects in the lower side of the stack. This causes flooding, stopping a fuel channel inside the stack and generates a reverse voltage in some cells of the stack. If this phenomenon is repeated, the stack performance can be suddenly degraded. What is therefore needed is a fuel cell and/or a fuel supply device for the fuel cell that reduces or prevents water from reaching and collecting within the fuel cell.

### SUMMARY OF THE INVENTION

It is an aim of the present invention to provide a fuel supply device for a fuel cell that reduces or prevents H₂O, used in reforming, from reaching and collecting in the fuel cell stack.

It is another aim of the present invention to provide a fuel cell system that includes the fuel supply device, the system having improved stability and reliability.

In order to accomplish the aims, there is provided a fuel supply device for a fuel cell, including a fuel reformer adapted to generate reformate via a reforming reaction, a gas-liquid separator coupled to an outlet of the fuel reformer, the gas-liquid separator being adapted to receive the reformate and control a moisture amount included within the reformate, a pipe coupled to an outlet of the gas-liquid separator, the pipe being adapted to pass the reformate, and a condensed water removing device coupled with the pipe, the condensed water removing device being adapted to reduce or prevent condensed water within the reformate within the pipe from passing to an outside.

The condensed water removing device can include a buffer vessel serially coupled to one end of the pipe, the buffer vessel can include an inner space, an inlet arranged on the upper side of the inner space and coupled to the pipe and an outlet adapted to discharge the reformate. The buffer vessel further can include a drain hole arranged on the lower side thereof and a drain valve coupled to the drain hole. The fuel supply device can also include a level sensor adapted to detect a fluid level collected within the buffer vessel and a controller adapted to control the drain valve based on the detected fluid level detected by the level sensor. The condensed water removing device can include a thermal insulating member surrounding the pipe.

The pipe can include the inlet, an inclined passage and an outlet, the inlet and the outlet of the pipe are opened toward a lower side and an upper side respectively, and the inclined passage has a downward slope from the outlet to the inlet. The thermal insulating member can include a non-combustible material. The fuel supply device can also include a heat exchanger adapted to modify a temperature of reformate emerging from the fuel reformer. The fuel supply device can also include a temperature sensor arranged between the pipe and the thermal insulating member and a controller adapted to control an operation of the heat exchanger based on a temperature detected by the temperature sensor. The fuel reformer can be a steam reformer.

According to another aspect of the present invention, there is provided a fuel cell system that includes a fuel cell stack, a fuel reformer adapted to generate reformate supplied to the fuel cell stack, a gas-liquid separator arranged between the fuel reformer and the fuel cell stack, the gas-liquid separator being adapted to control a moisture content included within the reformate, a pipe adapted to couple the gas-liquid separator to an anode inlet of the fuel cell stack, the pipe being adapted to allow the reformate to pass within and a condensed water removing device coupled to the pipe, the condensed water removing device being adapted to interrupt an influx of the condensed water into the fuel cell stack.

The condensed water removing device can include a buffer vessel serially coupled to one end of the pipe, the buffer vessel can include an inner space, an inlet arranged on the upper side of the inner space and coupled to the pipe and an outlet adapted to discharge the reformate. The buffer vessel further can include a drain hole arranged on the lower side thereof and a drain valve coupled to the drain hole. The fuel cell system can also include a level sensor adapted to detect a fluid level collected within the buffer vessel and a controller adapted to control the drain valve based on the detected fluid level detected by the level sensor. The condensed water removing device can include a thermal insulating member surrounding the pipe.

The pipe can include the inlet, an inclined passage and an outlet, the inlet and the outlet of the pipe are opened toward a lower side and an upper side respectively, and the inclined passage has a downward slope from the outlet to the inlet. The fuel cell system can also include a heat exchanger adapted to modify a temperature of reformate emerging from the fuel reformer. The fuel cell system can also include a temperature sensor arranged between the pipe and the thermal insulating member and a controller adapted to control an operation of the heat exchanger based on a temperature detected by the temperature sensor. The fuel reformer can be a steam reformer.

According to a first aspect of the invention, there is provided a fuel supply device as set out in Claim 1. Preferred features of this aspect are set out in Claims 2 to 11. According to a second aspect of the invention, there is provided a fuel cell system as set out in Claim 12.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a block diagram of a fuel cell system having a fuel supply device for a fuel cell according to a first embodiment of the present invention;

FIG. 2A is a graph showing a change in an output of a fuel cell system for a comparative example;

FIG. 2B is a graph showing a change in an output of the fuel cell system of an embodiment of the present invention;

FIG. 3 is a block diagram of a fuel cell system using a fuel supply device for a fuel cell according to a second embodiment of the present invention;

FIG. 4 is a cross-sectional view of main components of the fuel cell system of FIG. 3;

FIG. 5A is a graph showing the performance of each cell of the fuel cell system for the comparative example; and

FIG. 5B is a graph showing the performance of each cell of the fuel cell system according to an embodiment of the present invention.

### DETAILED DESCRIPTION OF THE INVENTION

Hereinafter, preferred embodiments of the present invention will be described in a more detailed manner with reference to the accompanying drawings. The following embodiments are provided for those skilled in the art to fully understand the present invention. The detailed description of known functions and configurations will be omitted so as not to obscure the subject of the present invention with unnecessary detail. However, in order to clearly explain the present invention, the parts not associated with the description are omitted in the drawings and like elements are denoted by like numerals throughout the drawings and the thickness and the size of each component can be exaggerated for convenience or clarity of explanation. Terms of "upper" and "lower" in the specification are based on an approximate gravity direction. A connection of two components can be a direct connection as well as a connection via another component throughout the specification. Also, a term referred to as "a fuel cell stack" is used throughout the specification, but this is for convenience of use. The "fuel cell stack" can include a stack-type stack or a flat-type stack.

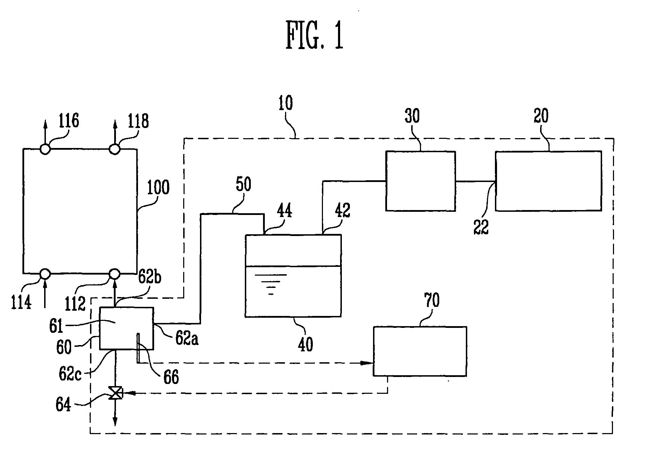

Turning now to FIG. 1, FIG. 1 is a block diagram of a fuel cell system using a fuel supply device for a fuel cell according to a first embodiment of the present invention. As illustrated in FIG. 1, the fuel cell system includes a fuel supply device 10 and a fuel cell stack 100 arranged to generate electric energy by the electro-chemical reaction of an oxidant and reformate supplied from the fuel supply device 10. The reformate is supplied to the fuel cell stack 100 through an inlet 112 of an anode and the oxidant is supplied to the fuel cell stack 100 through an inlet of a cathode. The reformate, the oxidant remaining after being used in the electro-chemical reaction and the by-products of the electro-chemical reaction are discharged through the outlet 116 of the anode and the outlet 118 of the cathode. Natural gas, methanol or ethanol can be used as the raw materials (reactants) that generate the reformate (products).

The fuel cell stack 100 includes an anode electrode catalyst, a cathode electrode catalyst, and membrane-electrode assemblies of an electrolyte inserted between these electrode catalysts. Also, the fuel cell stack 100 can be manufactured by stacking a plurality of membrane-electrode assemblies. In the stack-type stack, separators are arranged between the membrane-electrode assemblies.

Meanwhile, for convenience of illustration, in FIG. 1, an inlet 112 of the anode and an inlet 114 of the cathode are arranged on the lower side of the fuel cell stack 100 and an outlet 116 of the anode and an outlet 118 of the cathode are arranged on the upper side of the fuel cell stack 100. However, in some embodiments of the present embodiment, assuming that the fuel cell stack 100 is approximately a hexahedral shape, the inlet 112 of the anode, the inlet 114 of the cathode, the outlet 116 of the anode, and the outlet 118 of the cathode can be arranged on one surface of the lower side thereof coupled to the buffer vessel 60.

The electro-chemical reactions of the aforementioned fuel cell system are represented by the following reaction formulas 1 to 3:

[Reaction Formula 1]

Anode: H₂(g)→ 2H⁺+2e⁻

[Reaction Formula 2]

Cathode: ½ O₂(g)+2H⁺+2e⁻→ H₂O(1)

[Reaction Formula 3]

Overall: H₂(g)+½ O₂(g)→ H₂O(1)+electric energy+heat

The reformate is supplied to the fuel cell stack 100 and is generated through the steam reforming process using fuel and water as reactants. As a result, the reformate will include steam, The temperature of the reformate mixture including the steam can be lowered in a transfer pipe. This lowering of the temperature of the reformate mixture will cause some of steam included in the reformate to be condensed. If this condensed water is supplied to the fuel cell stack 100 along with the reformate, then the condensed water flowing in the fuel cell stack 100 can generate the voltage degradation and the reverse voltage phenomenon in some cells arranged on the lower side of the stack. Therefore, the fuel cell system of the present embodiment uses the fuel supply device 10 for the fuel cell, which includes a condensed water removing device to reduce or prevent the condensed water in the transfer pipe from reaching the fuel cell stack 100. Hence, little or no condensed water will reach the fuel cell stack 100. The condensed water removing device in some embodiments of the present invention includes the buffer vessel 60.

The fuel supply device 10 for the fuel cell of the present embodiment will be described in detail below. The fuel supply device 10 for the fuel cell includes the fuel reformer 20 arranged to generate the reformate supplied to the fuel cell stack 100, the heat exchanger 30 arranged to absorb heat from the reformate leaving the fuel reformer 20, the gas-liquid separator 40 arranged to control the moisture content of the reformate passing through the heat exchanger 30, a pipe 50 arranged to couple the gas-liquid separator 40 to the fuel cell stack 100, and the buffer vessel 60 arranged to store the condensed water generated by the change in the reformate temperature while passing through the pipe 50.

The fuel reformer 20 is a device for supplying optimal fuel to the fuel cell stack 100, that being hydrogen-rich gas. The fuel reformer 20 generates a hydrogen-rich reformate by reforming raw materials, such as propane, butane, natural gas, methanol, ethanol, etc. The fuel reformer 20 can use a catalyst process for a reforming reaction, such as steam reforming, partial oxidation reforming, autothermal reforming, or a combination thereof. Also, the fuel reformer 20 can use a catalyst process for removing impurities, such as carbon monoxide, sulfur, etc. in a reformate raw material. The aforementioned catalyst process includes a catalyst process for water gas shift (WGS) and a catalyst process for preferential oxidation.

The heat exchanger 30 is a device arranged to convert heat generated during the operation of the fuel cell system. The heat exchanger 30 can function to control the fuel cell system. In particular, the heat exchanger 30 of the present embodiment changes the temperature of reformate from the outlet 22 of the fuel reformer 20 into a preset temperature and supplies the heat exchanged reformate to the gas-liquid separator 40.

The heat exchanged reformate is supplied to the gas-liquid separator 40 through the inlet 42. The reformate, including moisture by an amount of saturated steam according to the current temperature, flows out from the gas-liquid separator 40 through the outlet 44. The gas-liquid separator 40 includes a chamber having an inner space with a predetermined size and water filled in this chamber at a predetermined level. It will be appreciated that the reformate mixture leaving the gas-liquid separator 40 may still contain steam.

The reformate passing through the outlet 44 of the gas-liquid separator 40 is supplied to the anode inlet 112 of the fuel cell stack 100 through the pipe 50 and the buffer vessel 60. At this time, the reformate passing through the pipe 50 is cooled due to the relatively cool temperature of the pipe 50, causing the steam present in the reformate mixture to condense into water.

The buffer vessel 60 has an inner space 61 having a predetermined size and is serially coupled to one end of the pipe 50. In other words, the buffer vessel 60 includes the inner space 61 with a predetermined size and includes an inlet 62a positioned on the upper side thereof and connected to the pipe 50 and an outlet 62b for discharging the reformate from the inner space 61. The outlet 62b of the buffer vessel 60 abuts with the inlet 112 of the anode arranged on the lower side of the stack 100 to be directly coupled to the inlet 112 or is adjacently coupled thereto through a short coupling pipe.

Also, the buffer vessel 60 includes a drain hole 62c positioned at the lower side of the chamber and a drain valve 64 capable of controlling a hole size of the drain hole 62c. A level sensor 66 can be installed at the inside of the buffer vessel 60. The level sensor 66 is positioned at the lower side of the buffer vessel 60 and detects the water level stored in the inner space 61 of the buffer vessel 60.

The controller 70 receives the level signal detected in the level sensor 66 through an input port and detects the water level stored in the buffer vessel 60 from the received level signal. The input port of the controller 70 can include an analog-digital converter. The controller 70 can be implemented by logic circuits using microprocessors or flip-flops. Also, the controller 70 controls the drain valve 64 to discharge the stored water in the buffer vessel 60 to the outside when the detected water level is higher than a preset reference level.

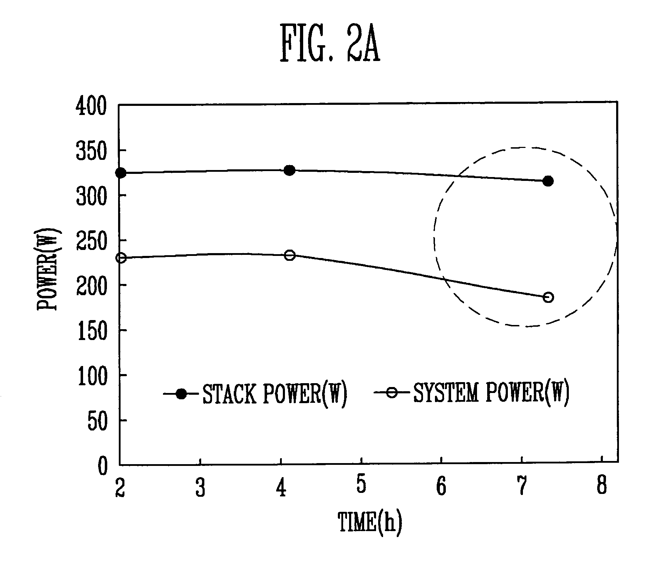

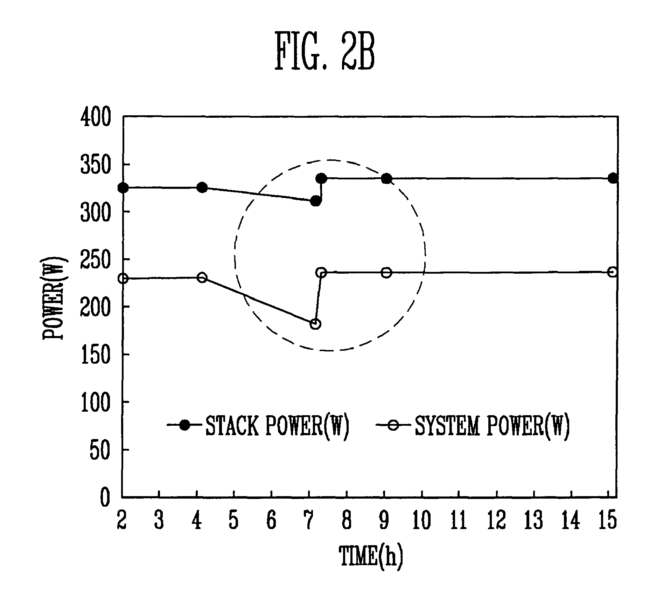

Turning now to FIGS. 2A and 2B, FIG. 2A is a graph showing a change in output power of a fuel cell system according to a comparative example over time and FIG. 2B is a graph showing a change in output power of the fuel cell system of an embodiment of the present invention over time. As shown in FIG. 2A, the fuel cell system of the comparative example tends to gradually reduce in stack performance over time. The power of the fuel cell stack is about 332W at first and is not significantly reduced with the passage of four hours. After the elapse of seven hours, the power of the fuel cell stack is reduced to about 310W. Although the power of the system is about 233W at first, it is reduced to about 180W with the passage of seven hours according to the reduction of the stack performance. The reason for this reduction in performance over time is due to the condensed water from the steam reforming flowing into and collecting inside of the fuel cell stack.

Therefore, in this embodiment of the present invention, a condensed water removing device is serially installed to the existing pipe coupled to the inlet of the anode to reduce or prevent condensed water from flowing into the inside of the fuel cell stack. In addition, this embodiment of the present invention also provides a device that measures the output power of the fuel cell stack after operating the fuel cell system installed with the condensed water removing device. The device may include sensors such as a voltage detector, a current detector, and a power detector. As shown in FIG. 2B, a fuel cell system of some embodiments of the present invention tends to maintain stack performance over time. In particular, before the condensed water removing device is turned on, the stack performance begins to gradually decay. However, when the condensed water removing device begins to operate, the loss in stack performance is immediately recovered, and then stack performance is steadily maintained at this level.

The present embodiment can effectively remove the condensed water from within the fuel cell stack. Therefore, the present embodiment can stably operate the fuel cell system for a long period of time while maintaining constant performance of the fuel cell stack. Also, the present embodiment can prevent damage to the stack caused by the presence of water inside of the fuel cell stack, resulting in improved stability and reliability of the fuel cell system.

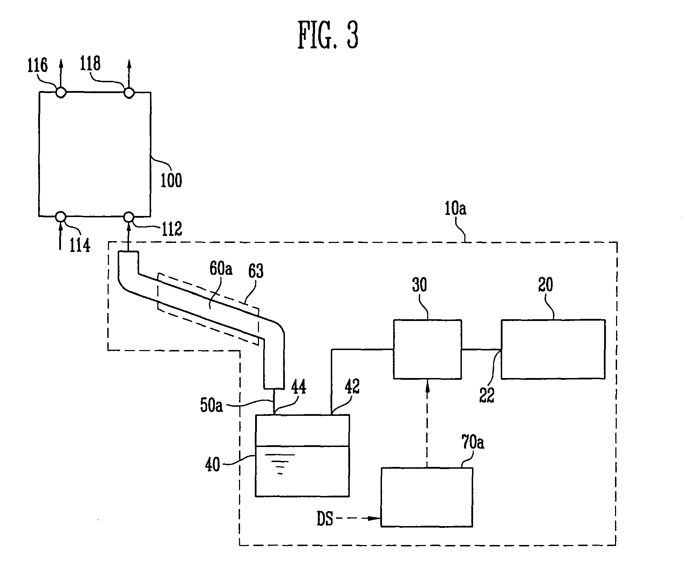

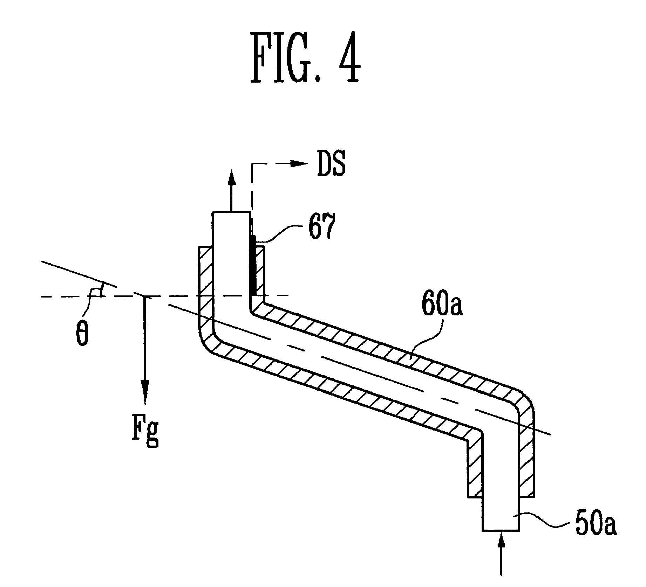

Turning now to FIGS. 3 and 4, FIG. 3 is a block diagram of a fuel cell system using a fuel supply device for a fuel cell according to a second embodiment of the present invention and FIG. 4 is a detailed cross-sectional view of main components in the fuel cell system of FIG. 3. Referring to FIG. 3, the fuel cell system includes the fuel cell stack 100 that generates electric energy by an electro-chemical reaction of fuel and an oxidant and the fuel supply device 10a that supplies the reformate as fuel to the fuel cell stack 100.

The fuel cell system of the second embodiment is mainly characterized by including the fuel supply device 10a having the condensed water removing device, as compared to the fuel cell system of the first embodiment.

Describing each component, the fuel cell stack 100 includes the inlet 112 of the anode, the inlet 114 of the cathode, the outlet 116 of the anode, and the outlet 118 of the cathode. For convenience of illustration, in FIG. 3, the inlet 112 of the anode and the inlet 114 of the cathode are arranged on a surface of a lower side of the stack 100, and the outlet 116 of the anode and the outlet 118 of the cathode are arranged on a surface of the upper side of the stack. Herein, the surface of the lower side of the stack 100 shows a first side coupled to the pipe 50a, and the surface of the upper side of the stack 100 shows a second side facing the first side.

Meanwhile, the inlet 112 of the anode, the inlet 114 of the cathode, the outlet 116 of the anode, and the outlet 118 of the cathode in the fuel cell stack 100 can instead all be arranged on the surface of the lower side of the stack 100. In this case, the plurality of cells stacked inside the fuel cell stack 100 can be referred to as a first cell to nth cell in order. On the other hand, the inlet 112 of the anode, the inlet 114 of the cathode, the outlet 116 of the anode, and the outlet 118 of the cathode in the fuel cell stack 100 can be of course arranged on more than two sides, respectively.

The fuel supply device 10a includes a fuel reformer 20 arranged to reform a raw material (reactants) using steam to generate the reformate, the heat exchanger 30 arranged to change the temperature of reformate from the fuel reformer 20, the gas-liquid separator 40 arranged to control the moisture amount of the reformate passing through the heat exchanger 30, a pipe 50a coupling the gas-liquid separator 40 to the fuel cell stack 100, and a thermal insulating member 60a surrounding the pipe 50a.

In particular, the pipe 50a surrounded by the thermal insulating member 60a includes an inclined passage 63 between the inlet and the outlet of the pipe. The inlet of the pipe 50a is coupled to the outlet 44 of the gas-liquid separator 40, and the outlet of the pipe 50a is coupled to the inlet 112 of the anode of the fuel cell stack 100.

The inclined passage 63 is referred to as a portion having an upward slope from the inlet of the pipe 50a to the outlet thereof as compared to the horizontal direction orthogonal to the vertical direction Fg, as shown in FIG. 4. In other words, the inclined passage 63 includes an intermediate portion of the pipe 50a inclined at a predetermined angle θ with respect to the horizontal direction that is orthogonal to the vertical direction Fg. The aforementioned inclined passage 63 is suitable to cause the water condensed in pipe 50a to flow back into the gas-liquid separator 40 when the system is temporally stopped during the operation of the fuel cell system or the operation of the system is stopped.

In other words, the condensed water removing device of this embodiment of the present invention surrounds the pipe 50a that connects the gas-liquid separator 40 to the inlet 112 of the anode of the fuel cell stack 100. The thermal insulation member 60a that surrounds pipe 50a suppresses the condensation of steam passing through the pipe 50a. Also, although the pipe 50a is surrounded with thermal insulation member 60a, even when the condensed water is generated within the pipe 50a caused by the reformate flowing through the pipe 50a, the generated condensed water flows backwards towards the gas-liquid separator 40, so that the influx of the condensed water into the stack 100 is reduced or prevented.

Also, the fuel cell system of the second embodiment contains a temperature sensor 67 arranged between the pipe 50a and the thermal insulation member 60a and a controller 70a controlling the operation of the heat exchanger 30 based on the detected temperature signal DS in the temperature sensor 67. The temperature sensor 67 can include any one of a thermistor, a resistance temperature detector, a thermocouple, a semiconductor temperature sensor, etc.

Also, the present embodiment can determine the temperature of the reformate supplied to the current fuel cell stack 100 by measuring the temperature of the thermal insulated pipe 50a. It is preferred that the heat exchanger can be controlled so that the reformate at an optimal temperature is supplied to the fuel cell stack 100 on the basis of the determined temperature of the reformate.

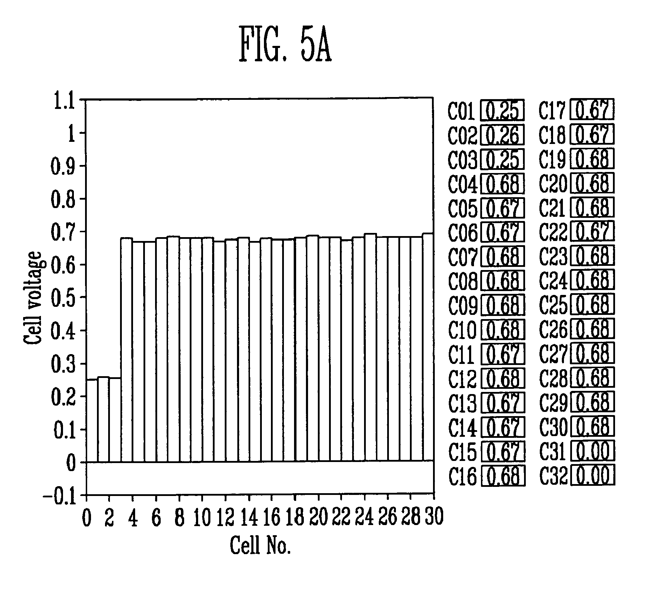

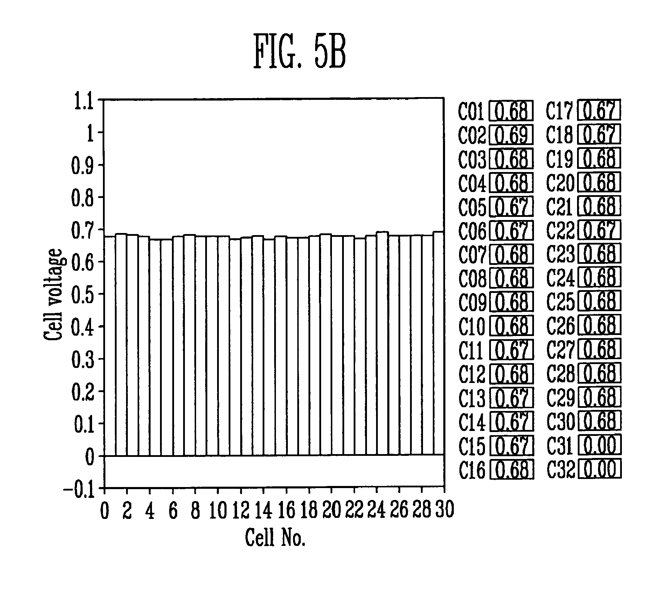

Turning now to FIGS. 5A and 5B, FIG. 5A is a graph showing the performance of each cell of the fuel cell system according to the comparative example and FIG. 5B is a graph showing the performance of each cell of the fuel cell system according to an embodiment of the present invention. The fuel cell system of the comparative example is set not to have the thermal insulating member like the condensed water removing device of the fuel cell system of FIG. 4.

As shown in FIG. 5A, in the fuel cell system of the comparative example not using a condensed water removing device of an embodiment of the present invention, while most cells have indicated a voltage of 0.67V or 0.68V, the first cell, the second cell, and the third cell have indicated 0.25V, 0.26V, and 0.25V, respectively. Herein, the first to third cells indicate cells arranged most adjacently to the anode inlet positioned on the lower side of the stack of 30 cells. There is a risk that these first to third cells easily causes the reverse voltage when the operation time is continued. The main reason why the cell voltages of the first through third cells are low is that condensed water generated in the pipe together with the reformate flows in the anode inlet of the stack.

Meanwhile, as shown in FIG. 5B, in the fuel cell system of the second embodiment, cell voltages of all cells have almost uniformly been 0.67V to 0.69V. Particularly, the voltages of the first cell, the second cell, and the third cell positioned on the lower side of the fuel cell stack have not been lowered. That is, reverse voltage generation in these first to third cells has been prevented. As such, with the second embodiment, in the polymer electrolyte membrane fuel cell using the reformate at a low temperature on the order of 50 to 60° C as fuel, it is possible to reduce or prevent condensed water from flowing into the fuel cell stack through the anode inlet. Therefore, it is possible to stably operate the fuel cell system for a long time while maintaining performance of the fuel cell stack. Also, it is possible to reduce or prevent the condensed water flowingto the inside of the fuel cell stack and then having an adverse effect on the stack, thus improving the stability and the reliability of the fuel cell system. With embodiments of the present invention, it is possible to reduce or prevent water from flowing into the fuel cell stack. Therefore, it is possible to reduce or prevent flooding of the anode of the fuel cell system, resulting in a stable operation of the stack, and an improved reliability of system operation.

Although a few embodiments of the present invention have been shown and described, it would be appreciated by those skilled in the art that changes might be made in this embodiment without departing from the principles of the invention, the scope of which is defined in the claims and their equivalents.

## Claims

1. A fuel supply device, comprising:
a fuel reformer adapted to generate reformate via a reforming reaction;
a gas-liquid separator coupled to an outlet of the fuel reformer, the gas-liquid separator being adapted to receive the reformate and to control a moisture amount included in the reformate;
a pipe having a pipe inlet coupled to an outlet of the gas-liquid separator and a pipe outlet, the pipe being adapted to pass the reformate to the pipe outlet; and
a condensed water removing device coupled with the pipe, the condensed water removing device being adapted to reduce the amount of condensed water passing to the pipe outlet, the condensed water being generated from moisture included in the reformate within the pipe.

2. A fuel supply device according to claim 1, wherein the condensed water removing device is arranged to prevent condensed water generated within the pipe from passing to the pipe outlet.

3. A fuel supply device according to claim 1 or 2, wherein the condensed water removing device comprises a buffer vessel serially coupled to one end of the pipe, the buffer vessel comprising:
an inner space;
an inlet arranged on the upper side of the inner space and coupled to the pipe; and
an outlet adapted to discharge the reformate.

4. A fuel supply device according to claim 3, wherein the buffer vessel further comprises:
a drain hole arranged on the lower side thereof; and
a drain valve coupled to the drain hole.

5. A fuel supply device according to claim 4, further comprising:
a level sensor adapted to detect a fluid level collected within the buffer vessel; and
a controller adapted to control the drain valve based on the detected fluid level detected by the level sensor.

6. A fuel supply device according to any one of claims 1 to 5, wherein the condensed water removing device comprises a thermal insulating member surrounding at least a portion of the pipe.

7. A fuel supply device according to claim 6, wherein the thermal insulating member comprises a non-combustible material.

8. A fuel supply device according to any one of claims 1 to 7, wherein the pipe comprises an inclined passage, wherein the pipe inlet and the pipe outlet are opened toward a lower side and an upper side respectively, and the inclined passage has a downward slope from the pipe outlet to the pipe inlet.

9. A fuel supply device according to any one of claims 1 to 8, further comprising a heat exchanger adapted to change a temperature of reformate emerging from the fuel reformer.

10. A fuel supply device according to claim 9, when also dependent on claim 6 or 7, further comprising:
a temperature sensor arranged between the pipe and the thermal insulating member; and
a controller adapted to control an operation of the heat exchanger based on a temperature detected by the temperature sensor.

11. The fuel supply device according to any one of claims 1 to 10, wherein the fuel reformer comprises a steam reformer.

12. A fuel cell system, comprising:
a fuel cell stack;
a fuel supply device according to any one of claims 1 to 11; wherein:
the reformate is arranged to be supplied to the fuel cell stack;
the gas-liquid separator is arranged between the fuel reformer and the fuel cell stack;
the pipe is adapted to couple the gas-liquid separator to an anode inlet of the fuel cell stack,; and
the condensed water removing device is adapted to reduce an influx of the condensed water into the fuel cell stack.
